Europäisches Patentamt

European Patent Office

Office européen des brevets

(19)

(11) Veröffentlichungsnummer: **0 184 744 B1**

# EUROPÄISCHE PATENTSCHRIFT

(12)

(45) Veröffentlichungstag der Patentschrift: **10.04.91**

(51) Int. Cl.⁵: **B29C 45/17**, B22D 17/22

(21) Anmeldenummer: **85115239.7**

(22) Anmeldetag: **30.11.85**

(54) Werkzeug, insbesondere Spritzgiessform.

(30) Priorität: **08.12.84 DE 3444800**
**22.03.85 DE 3510329**

(43) Veröffentlichungstag der Anmeldung:
**18.06.86 Patentblatt 86/25**

(45) Bekanntmachung des Hinweises auf die
Patenterteilung:
**10.04.91 Patentblatt 91/15**

(84) Benannte Vertragsstaaten:
**AT BE CH DE FR GB IT LI NL SE**

(56) Entgegenhaltungen:
**GB-A- 2 108 622**
**US-A- 2 781 199**
**US-A- 2 816 770**

**PLASTICS & RUBBER INTERNATIONAL, Band
9, Nr. 5, Oktober 1984, Seite 6, London, GB;
"Quick action clamp for moulders"**

(73) Patentinhaber: **Wörner, Alois**
**Dreitorestrasse 6**
**W-7580 Bühl-Neusatz(DE)**

(72) Erfinder: **Wörner, Alois**
**Dreitorestrasse 6**
**W-7580 Bühl-Neusatz(DE)**

(74) Vertreter: **Geitz, Heinrich, Dr.-Ing.**
**Postfach 2708 Kaiserstrasse 156**
**W-7500 Karlsruhe 1(DE)**

**Beschreibung**

Die Erfindung bezieht sich auf eine Schnellspannvorrichtung zum lösbaren Spannen der gegeneinander bewegbaren Hälften eines Werkzeugs, bei dem es sich insbesondere um eine Spritzgießform handeln kann, an den Aufnahmeplatten einer Maschine.

Schnellspannvorrichtungen zum lösbaren Spannen der Hälften von Werkzeugen oder beispielsweise Spritzgießformen an den Aufnahmeplatten entsprechender Maschinen sind bekannt. Dabei sind unter Werkzeug- oder Formhälften die beiden gegeneinander bewegbaren Teile eines Werkzeugs oder einer Form zu verstehen, auch wenn sich die Teilungsebene nicht in der Mitte des Werkzeugs bzw. der Form erstreckt und mithin die gegeneinander bewegbaren Teile des Werkzeugs oder der Form durchaus unterschiedlich ausgebildet sein können.

In der PCT-Anmeldung WO 83/01038 ist eine Vorrichtung zum Spannen von Formwerkzeugen an Formträgern einer Spritzgießmaschine vorbeschrieben, bei der sich von den Form hälften eines Werkzeugs seitlich Spannbolzen forterstrecken, die in entsprechende Aussparungen in den Formträgerplatten eingreifen. Rechtwinklig zu den genannten Aussparungen, in denen in der Kupplungslage die Spannbolzen aufgenommen sind, verlaufen in den Formträgerplatten Führungen, in denen als Verriegelungsmittel für die Spannbolzen Keile bewegbar geführt sind, die im Verriegelungsfalle sich durch Querausnehmungen der Spannbolzen hindurcherstrecken und diese dadurch in ihren Lagen sichern. Der Betätigung der als Keile ausgebildeten Verriegelungsmittel zwischen ihren in die Querausnehmungen der Spannbolzen eingreifenden Verriegelungslagen und ihren gegenüber den Spannbolzen zurückgezogenen Lagen dienen mit Hydraulikmittel beaufschlagbare Arbeitszylinder.

Aus der GB-A-2 108 622 ist ebenfalls eine Vorrichtung dieser Art und Zweckbestimmung mit jeweils an einer Aufnahmeplatte einer Maschine befestigbaren Werkzeughälften bekannt, die je mit einer ihrerseits an der jeweiligen Aufnahmeplatte der Maschine befestigbaren Schnellspannplatte durch Schnellkupplungsmittel fest, jedoch lösbar verbunden sind. Die Schnellkupplungsmittel umfassen jeweils mehrere seitlich über die betreffende Werkzeughälfte vorstehende, in entsprechenden Aufnahmebohrungen der der jeweiligen Werkzeughälfte zugeordneten Schnellspannplatte aufgenommene Spannbolzen und in letztere etwa rechtwinklig zu deren Längsachsen durchdringende Querausnehmungen formschlüssig eingreifende Verriegelungsstangen, die ihrerseits in rechtwinklig zu den Aufnahmebohrungen für die Spannbolzen verlaufenden Lagerbohrungen drehbar aufgenommen und axial aus ihren Eingriffslagen mit den Querausnehmungen der Spannbolzen verschiebbar sowie mit in der Kupplungslage mit einer Spannfläche der jeweils durchdrungenen Querausnehmung eines Spannbolzens verspannbaren Spannexzentern ausgerüstet sind.

Die Ausrüstung derartiger Werkzeuge oder Gießformen mit Befestigungsvorrichtungen der erläuterten Art dient dem Zwecke, einen schnellen und problemlosen Werkzeugwechsel zu ermöglichen, wobei die Hälften eines Werkzeugs genau zentriert an den entsprechenden Aufnahmeplatten der jeweiligen Maschine aufgenommen werden müssen. Diesem Bedürfnis genügen die vorbekannten Befestigungsvorrichtungen nicht immer hinlänglich, weil es zuweilen beim Einführen der seitlich über die Werkzeughälften vorstehenden Spannbolzen in die Aufnahmebohrungen der Schnellspannplatten bzw. bei der Demontage zwischen den Aufnahmebohrungen und den Spannbolzen zu Klemmungen kommen kann. Naturgemäß macht dies einen schnellen und einfachen Werkzeugwechsel unmöglich. Insbesondere besteht die Gefahr derartiger Verklemmungen dadurch, daß in der Verriegelungslage die mit den Querausnehmungen der Spannbolzen verspannten Verriegelungselemente Deformationen an den Spannbolzen verursachen können. In solchen Fällen gelingt es nicht mehr oder nur mit großer Mühe, ein in einer Maschine aufgenommenes Werkzeug zu demontieren. Demgemäß soll durch die Erfindung eine verbesserte Schnellspannvorrichtung der eingangs erläuterten Art und Zweckbestimmung geschaffen werden, die mit einfachen und funktionssicheren Mitteln zum schnellen und unproblematischen Montieren und Demontieren eines Werkzeugs ausgerüstet ist.

Gelöst ist diese Erfindungsaufgabe dadurch, daß von den Werkzeughälften seitlich vorstehende Spannbolzen in Aufnahmebohrungen eingreifen, die sich ihrerseits an den maschinenseitigen Aufnahmeplatten befestigbaren Schnellspannplatten rechtwinklig zu deren Flächenausdehnung erstrecken, daß die über die Werkzeughälften vorstehenden Abschnitte der Spannbolzen als sich zu den Spannbolzenenden hin verjüngende Konen ausgebildet und mit Querausnehmungen in Form einseitig offener, annähernd U-förmiger Quernuten versehen sind, die jeweils etwa bis zur Längsachse der Spannbolzen reichen, daß die Aufnahmebohrungen in den Schnellspannplatten als den Konen der Spannbolzen angepaßte Innenkonen ausgebildet sind, daß in die Querausnehmungen der Spannbolzen Verriegelungsstangen eingreifen, die in rechtwinklig zu den Aufnahmebohrungen für die Spannbolzen verlaufenden Lagerbohrungen in den Schnellspannplatten drehbar aufgenommen und axial aus ihren Eingriffslagen mit den Querausnehmungen der Spannbolzen verschiebbar sind, und daß jede Verriegelungsstange einen in der Kupplungslage mit einer Spannfläche der jeweils durchdrungenen Querausnehmung eines Spannbolzens verspannten Spannexzenter besitzt.

Eine derartige Ausbildung der Schnellspannvorrichtung mit konisch gestalteten Spannbolzen und letzteren angepaßten Aufnahmebohrungen in Form von Innenkonen ermöglicht ein leichtes Einführen der Spannbolzen in die Aufnahmebohrungen bei gleichzeitiger Zentrierung, aber auch ein unproblematisches Entkuppeln zwecks Trennung einer Werkzeughälfte von der in der Kupplungslage zugeordneten Schnellspannplatte. Insbesondere ist eine leichte Handhabbarkeit dann gewährleistet, wenn die sich jeweils zum freien Ende eines jeden Spannbolzens hin verjüngenden Konen über die gesamte Länge der in der Kupplungslage in die Aufnahmebohrungen der Schnellspannplatten eingreifenden Abschnitte der Spannbolzen reichen.

Die erfindungsgemäße Schnellspannvorrichtung, die je Werkzeughälfte wenigstens zwei Spannbolzen umfaßt, gewährleistet somit neben ihrer Kupplungsfunktion gleichzeitig auch eine lagerichtige Zuordnung einer Werkzeughälfte und einer Schnellspannplatte zueinander, so daß es keinerlei sonstiger Zentriermittel oder eines besonderen Ausrichtens der Werkzeuge beim Einbau bedarf.

Bei einer derartigen Ausgestaltung gelingt es, nachdem die Spannbolzen in ihre Aufnahmebohrungen eingeführt sind, die Verriegelungsstangen durch axiales Verschieben in ihren Lagerbohrungen in formschlüssige Eingriffslagen mit den Querausnehmungen der Spannbolzen zu bringen, so daß bereits in dieser Lage eine Arretierung und Halterung der jeweiligen Werkzeug hälfte an der zugeordneten Schnellspannplatte bzw. umgekehrt erreicht ist. Für die Fixation der miteinander zu kuppelnden Teile bedarf es dann lediglich einer Drehung der in Lagerbohrungen aufgenommenen Verriegelungsstangen um ihre Längsachsen, um die Spannexzenter mit den entsprechenden Spannflächen der Querausnehmungen in den Spannbolzen zum Zusammenwirken zu bringen und dadurch eine formschlüssig feste, jedoch jederzeit lösbare Verbindung herzustellen.

Zwar ist aus der US-A-2 781 199 schon eine Befestigungsvorrichtung bekannt, bei der ein konischer Spannzapfen in ein entsprechend gestaltetes Aufnahmeloch eingreift und mittels eines Spannexzenters in der Kupplungslage verspannbar ist, aber dabei handelt es sich nicht um die Verbindung eines Werkzeugs bzw. einer Werkzeughälfte mit einer maschinenseitigen Aufnahmeplatte, sondern um die austauschbare Anordnung eines Werkzeugträgers, beispielsweise eines Spannfutters, an einer Spannplatte einer Drehmaschine. Bei dieser Vorrichtung ist der Spannexzenter drehbar, aber nicht axial aus seiner Eingriffslage mit einer SpannbolzenQuerausnehmung herausziehbar gelagert, sondern mit einer einseitigen Abflachung versehen, die in einer bestimmten Drehstellung ein ungehindertes Einführen der Spannbolzen in ihre Aufnahmebohrungen sowie ein unbehindertes Entkuppeln erlaubt. Demgemäß sind die der Verriegelung der Spannexzenter mit den Spannbolzen dienenden Querausnehmungen als C-förmige Mulden geringer Tiefe ausgebildet.

Es handelt sich somit bei der Befestigungsvorrichtung nach der US-A-2 781 199 um ein in der Kupplungslage starres System, das der Zweckbestimmung der erfindungsgemäßen Schnellspannvorrichtung nicht genügen könnte, weil angesichts der bei bestimmungsgemäßer Verwendung der Vorrichtung nach der Erfindung stoßweisen Belastungen beim Schließen und Öffnen der Hälften eines aufgespannten Werkzeugs es zu einer allmählichen Lockerung der Kupplungsverbindung zwischen den Werkzeughälften und den Schnellspannplatten kommen könnte.

Bei der erfindungsgemäßen Vorrichtung erstrecken sich demgegenüber die U-förmigen Querausnehmungen der Spannbolzen etwa bis zur Spannbolzenlängsachse. Dies gewährleistet, daß in der Kupplungslage nicht nur eine formschlüssige Arretierung der Spannbolzen erfolgt, sondern die Spannexzenter der Verriegelungsstangen greifen an den ausgeprägten Spannflächen der U-förmigen Querausnehmungen an und bewirken beim Spannen eine begrenzte elastische Deformation der Spannbolzenenden, die bei Wegnahme der von den Spannexzentern vermittelten Spannkräfte elastisch zurückfedern. Dies ist mitursächlich dafür, daß unbeschadet eines präzisen Spannens bei der erfindungsgemäßen Vorrichtung keine Verklemmungen der Spannbolzen in den sie aufnehmenden konischen Bohrungen eintreten.

Der elastischen Deformierbarkeit der Spannbolzen infolge des Angriffs der Spannexzenter an den Spannflächen der U-förmigen Querausnehmungen kommt bei der Erfindung auch insofern Bedeutung zu, als bei Wegnahme der Exzenterverspannung die Rückstellung der in der Spannlage elastisch deformierten Spannbolzenenden in die Ursprungslage sichergestellt ist, womit eine wünschens werte Einbauwiederholgenauigkeit gewährleistet ist. Darüber hinaus kann angesichts der elastischen Verspannung in der Kupplungslage ein allmähliches Lockern im Betrieb nicht eintreten.

Eine Ausführungsform der Erfindung soll nachstehend anhand der beigefügten Zeichnung erläutert werden. In schematischen Ansichten zeigen:

Fig. 1    eine zwischen einer feststehenden und einer bewegbaren Aufnahmeplatte einer Spritzgießmaschine aufgenommene Spritzgießform in einer teilweise geschnitten dargestellten Vorderansicht,

Fig. 2    die in Fig. 1 in der Einbaulage veranschaulichte Spritzgießform für sich allein mit zwei seitlichen, an maschinenseitigen Aufnahmeplatten befestigbaren Schnellspannplatten in einer perspektivischen Ansicht, gleichfalls teilweise geschnitten,

Fig. 3    ebenfalls in einer perspektivischen Ansicht eine Schnellspannplatte für sich allein mit je einem gesondert dargestellten Spannbolzen und einer Verriegelungsstange,

Fig. 4    eine Verriegelungsstange für sich allein in einer vergrößerten Ansicht,

Fig. 5    die Verriegelungsstange mit Blick gemäß Pfeil V in Fig. 4 auf den Spannexzenter,

Fig. 6    einen Spannbolzen für sich allein in einer vergrößerten Teilansicht

Fig. 7    in einem Ausschnitt aus einer Schnellspannplatte eine als Innenkonus ausgebildete Aufnahmebohrung für einen Spannbolzen in einer Schnittansicht und

Fig. 8    in einer Ansicht wie in Fig. 6 das Zusammenwirken des Spannexzenters der Verriegelungsstange mit einer Querausnehmung im Spannbolzen.

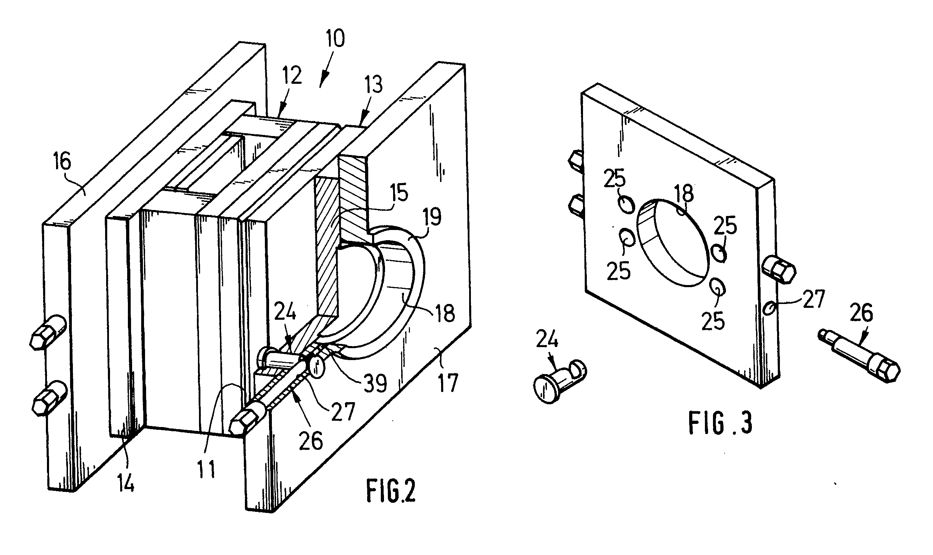

Die in Fig. 2 für sich allein gezeigte Spritzgießform 10 besitzt zwei in einer Teilungsfuge 11 getrennte Formhälften 12, 13 mit äußeren Platten 14, 15, die zwischen Schnellspannplatten 16, 17 aufgenommen und mit diesen durch unten noch zu erläuternde Schnellkupplungsmittel fest, jedoch lösbar verbunden sind. Die Schnellspannplatten 16, 17 sind im Bereich einer hier zunächst nicht weiter interessierenden Ausnehmung 18 auf den voneinander abgewandten Seiten mit sich über ihre Außenflächen erhebenden Zentrierbunden 19 versehen.

Bei bestimmungsgemäßem Einbau der Spritzgießform 10 zwischen den Aufnahmeplatten 20,21 einer in Fig .1 nur angedeuteten Spritzgießmaschine greifen die Zentrierbunde 19 in Zentrierausnehmungen 22 der genannten Aufnahmeplatten 20,21 ein und bewirken dadurch eine Zentrierung der Formhälften 12, 13 in bezug auf die Aufnahmeplatten 20, 21 der Maschine. Im übrigen sind die Schnellspannplatten 16, 17 mittels nicht weiter dargestellter Befestigungsschrauben fest, jedoch lösbar, mit den Aufnahmeplatten 20,21 der Maschine verschraubt.

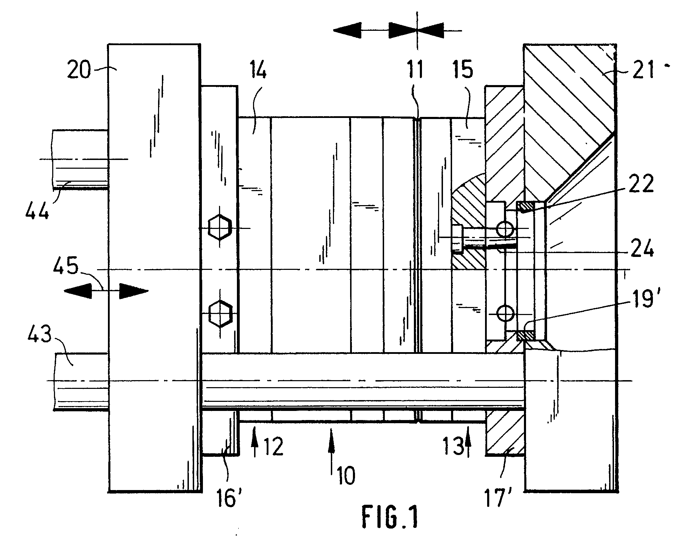

Bei der Ausführungsform nach Fig. 1 sind die Schnellspannplatten 16' , 17' nicht mit Zentrierbunden versehen, sondern mit einer der Zentrierausnehmung 22 in den Aufnahmeplatten 20,21 der Maschine angepaßten Eindrehung, in die ein Zentrierring 19' eingesetzt ist. Diese Zentrierringe 19' greifen gleichzeitig in die Zentrierausnehmungen 22 der angrenzenden Aufnahmeplatten 20,21 der Maschine ein und vermitteln dadurch in gleicher Weise, wie die Ringbunde 19 bei der Ausführungsform nach Fig. 2 eine lagerichtige Aufnahme der Schnellspannplatten 16', 17' an den Aufnahmeplatten 20,21 der Maschine. Die Verschraubungen zum Befestigen der Schnellspannplatten 16', 17' an den Aufnahmeplatten 20,21' der Maschine sind ebenfalls nicht dargestellt.

Die Schnellkupplungsmittel zum festen, jedoch jederzeit lösbaren Verbinden der Formhälften 12, 13 mit jeweils einer Schnellspannplatte 16, 17 bzw. 16',17' bestehen aus mit den äußeren Platten 14, 15 der Formhälften 12, 13 fest verbundenen und sich außenseitig über die von den genannten Platten aufgespannten Ebenen hinauserstreckenden Spannbolzen 24, aus entsprechend der Lage dieser Spannbolzen angeordneten Aufnahmebohrungen 25 in den Schnellspannplatten die sich rechtwinklig zur Ebene der Schnellspannplatten erstrecken sowie in bezug auf eine Vertikalebene beidseitig der die Schnellspannplatten durchdringenden Mittelausnehmungen 18 und symmetrisch zu diesen angeordnet sind, und aus Verriegelungsstangen 26, die in der aus den Fig. 2 und 3 ersichtlichen Weise in Lagerbohrungen 27 aufgenommen sind, die sich in den Schnellspannplatten rechtwinklig zu den Aufnahmebohrungen 25 für die Spannbolzen 24 verlaufend erstrecken und diese Aufnahmebohrungen außermittig schneiden. Dies soll unten noch näher erläutert werden.

Die Verriegelungsstangen 26 haben einen der Lagerbohrung 27 angepaßten Zapfenabschnitt 28, der auf einer Seite von einem Ringbund 29 begrenzt ist, an den sich eine Schlüsselansatzfläche 30 anschließt. Auf der anderen Seite folgt auf den Zapfenabschnitt 28 ein Spannexzenter 31 und an diesen schließt sich ein koaxial zum Zapfenabschnitt 28 verlaufender Lagerzapfen 32 an, der einen gegenüber dem Zapfenabschnitt 28 reduzierten Durchmesser aufweist.

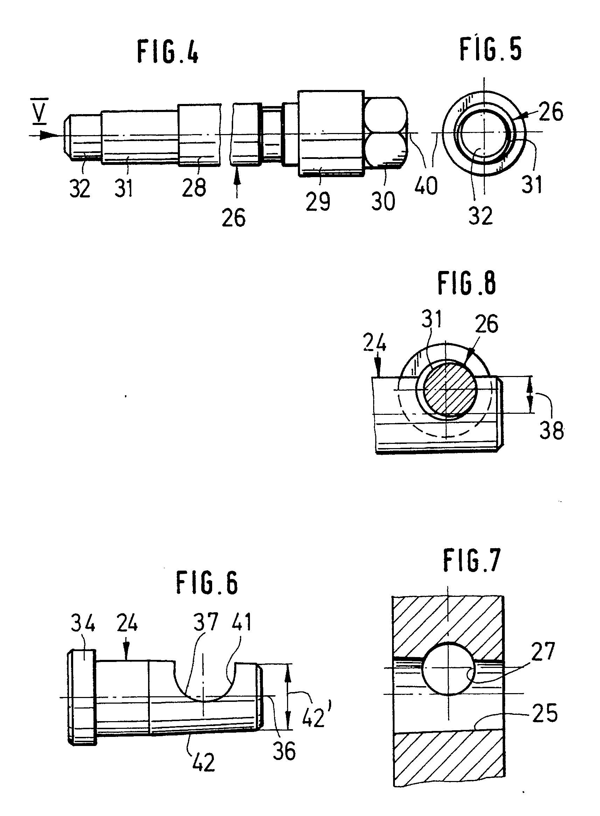

Die mit den äußeren Platten 14, 15 der Werkzeughälften 12, 13 fest verbundenen und über die Außenflächen dieser äußeren Platten hinausragenden Spannbolzen 24, die auf der zur jeweiligen Werkzeughälfte hinweisenden Seite einen in der Werkzeughälfte aufgenommenen Bolzenkopf 34 besitzen, sind mit einem sich zu den vom Bolzenkopf 34 entfernten Bolzenende hin verjüngenden Konus 42 versehen und haben in der Nähe ihrer über die äußeren Platten 14, 15 vorstehenden Enden rechtwinklig zu den Spannbolzenachsen 36 verlaufende Querausnehmungen 37, die sich von einer Seite aus bis etwa zur Spannbolzenlängsachse 36 in die Spannbolzen hineinerstrecken und als etwa U-förmige, einseitig offene Einschnitte ausgebildet sind. Der Konus 42 erstreckt sich über die gesamte Länge des Bolzenabschnittes, der im eingebauten Zustand über die die Werkzeughälften seitlich begrenzenden Platten 14, 15 seitlich vorsteht. Der in der Einbaulage innerhalb der Platten 14, 15 aufgenommene Teil des Spannbolzens 24 zwischen dem Konus 42 und dem Bolzenkopf 34 ist hingegen zylindrisch ausgebildet. Der Konus 42 besitzt, wie in Fig. 6 angedeutet, nur einen kleinen Öffnungswinkel 42' und die Querausnehmungen 37 ist im Bereich des konischen Abschnittes angeordnet.

Korrespondierend zu dem Konus 42 des Spannbolzens 24 ist das von einer Lagerbohrung 27 für eine Verriegelungsstange 26 außermittig geschnittene Aufnahmeloch 25 in der in Fig. 7 ausschnittsweise veranschaulichten Schnellspannplatte als dem Konus 42 des Spannbolzens 24 angepaßter Innenkonus ausgebildet.

Die rechtwinklig zueinander in den Schnellspannplatten verlaufenden und jeweils einander schneidenden Aufnahmebohrungen 25 für die Spannbolzen 24 und die Lagerbohrungen 27 für die Aufnahme der Verriegelungsstange 26 sind um ein in Fig. 8 mit 38 bezeichnetes Maß in der Weise gegeneinander versetzt, daß bei in Kupplungslage stehenden Spannbolzen 24 und in Verriegelungslage stehenden Verriegelungsstangen 26 letztere mit ihren Spannexzentern 31 in der in Fig. 7 ersichtlichen Weise in die Querausnehmungen 37 in den Spannbolzen 24 eingreifen. In dieser Lage sind die Lagerzapfen 32 auf der von den Lagerabschnitten 28 der Verriegelungsstangen 26 entfernten Seite in angepaßten Lagerbohrungen 39 in den Schnellspannplatten aufgenommen und mithin sind die Verriegelungsstangen beidseitig der Spannexzenter 31 gelagert. In dieser Montagelage führt eine Drehung der Verriegelungsstangen 26 um ihre Längsachsen 40 zu einem Zusammenwirken der Spannexzenter 31 mit den Spannflächen 41 der Querausnehmungen 37 in den Spannbolzen 24 und damit zu einer präzisen Fixation der zugeordneten Werkzeughälfte an der ihrerseits an einer Aufnahmeplatte der Maschine fest, jedoch lösbar angebrachten Schnellspannplatte.

Bei bestimmungsgemäßer Verwendung eines erfindungsgemäßen Werkzeugs werden die Schnellspannplatten 16, 17 bzw. 16', 17' in der aus Fig. 1 ersichtlichen Weise an den Aufnahmeplatten 20, 21 der Maschine montiert, wobei die Lage der Schnellspannplatten durch die Zentrierbunde 19 bzw. die Zentrierhülsen 19' gewährleistet ist. Die Befestigung der Schnellspannplatten an den genannten Aufnahmeplatten 20,21 erfolgt in bekannter Weise mittels Befestigungsschrauben, was nicht weiter dargestellt ist. Nach der Montage der Schnellspannplatten an den Aufnahmeplatten der Maschine werden zum Zwecke der Werkzeugmontage die Verriegelungsstangen 26 aus ihren Lagerbohrungen 27, 39 um ein solches Maß herausgezogen, daß die Spannexzenter 31 und die Lagerzapfen 32 nicht mehr in die Aufnahmebohrungen 25 für die Spannbolzen 24 hineinragen.

Nach dieser Montagevorbereitung kann ein mit Spannbolzen 24 ausgerüstetes Werkzeug 10 in der Weise montiert werden, daß das Werkzeug zwischen die mit Schnellspannplatten ausgerüsteten Aufnahmeplatten 20,21 einer Maschine lagerichtig eingeführt und dann zunächst die Spannbolzen 24 der Werkzeughälfte, die einer feststehenden Aufnahmeplatte 21 der Maschine benachbart ist, in die Aufnahmebohrungen 25 in der an der genannten Aufnahmeplatte befestigten Schnellspannplatte eingeführt werden, worauf die Verriegelungsstangenbolzen 26 axial in solcher Weise in ihren Lagerbohrungen 27, 39 verschoben werden, daß die Spannexzenter 31 in die einseitig offenen Querausnehmungen 37 an den Enden der Spannbolzen 24 eingreifen und die an die Spannexzenter 31 angrenzenden Lagerzapfen 32 der Verriegelungsstangen in den entsprechend bemessenen Lagerbohrungen 39 aufgenommen werden. Nach dieser Vormontage bedarf es lediglich einer Drehung der in Eingriffslage mit den Ausnehmungen 37 der Spannbolzen 24 gebrachten Verriegelungsstangen 26 um ihre Längsachsen 40, um infolge Zusammenwirkens der Spannexzenter 31 mit den Spannflächen 41 der Querausnehmungen 37 eine formschlüssig feste Fixation der Werkzeughälfte mit der zugeordneten Schnellspannplatte zu erreichen.

Das Spannen der anderen Werkzeughälfte gelingt dann in der Weise, daß die ebenfalls mit einer Schnellspannplatte versehene bewegbare Aufnahmeplatte 20, die auf hier nicht weiter interessierenden Querführungen 43, 44 aufgenommen und gemäß Doppelpfeil 45 in Fig. 1 gegenüber der feststehenden Aufnahmeplatte 21 der Maschine bewegbar ist, an das beispielsweise mittels eines Krans gehaltene oder in sonstiger Weise lagerichtig unterstützte Werkzeug herangefahren wird, bis die Spannbolzen 24 dieser Werkzeughälfte vollständig in die Aufnahmebohrungen 25 der an der bewegbaren Aufnahmeplatte angeordneten Schnellspannplatte eingreifen. Durch Einschieben der zugeordneten Verriegelungsstangen 26 in ihre Lagerbohrungen und durch Drehen der Verriegelungsstangen in ihre Spannlagen erfolgt dann das Spannen dieser Werkzeughälfte an der genannten Schnellspannplatte.

Es ist ersichtlich, daß bei der erfindungsgemäßen Ausbildung des als Spritzgießform ausgebildeten Werkzeugs ein äußerst einfacher und schneller Werkzeugwechsel gelingt, indem vor der Demontage das Werkzeug 10 an einen Kran angehängt oder in sonstiger geeigneter Weise unterstützt wird, worauf die Verriegelungsstangen 26 durch Drehung um ihre Längsachsen 40 und axiales Herausziehen aus ihren Verriegelungslagen außer Eingriff mit den Querausnehmungen 37 der Spannbolzen 24 gebracht werden. Danach kann die bewegbare Aufnahmeplatte 20 der Maschine gemäß Doppelpfeil 45 in Fig. 1 seitlich verfahren werden, wodurch die Spannbolzen 24 außer Eingriff mit den Aufnahmebohrungen 25 der mit der genannten Aufnahmeplatte verbundenen Schnellspannplatte gelangen. In der Folge bedarf es einer Verschiebung des Werkzeugs von der feststehenden Aufnahmeplatte 21 der Maschine weg, bis die der angrenzenden Werkzeughälfte zugeordneten Spannbolzen 24 außer Eingriff mit den Aufnahmebohrungen 25 der dieser Aufnahmeplatte zugeordneten Schnellspannplatte gelangen. Das Werkzeug ist dann frei und kann in hier nicht weiter interessierender Weise aus der Maschine entfernt sowie durch ein anderes Werkzeug ersetzt werden, dessen Einbau in der oben erläuterten Weise erfolgt.

Bei der veranschaulichten Ausführungsform sind je Werkzeughälfte vier Spannbolzen 24 eingesetzt, die in lagerichtig in der jeweiligen Schnellspannplatte angeordneten Aufnahmebohrungen 25 aufgenommen werden und dabei die Lage der Werkzeughälfte in bezug auf die entsprechende Schnellspannplatte zentrieren und fixieren. Selbstverständlich können in Abhängigkeit von der Beschaffenheit des Werkzeugs und/oder von den beim Öffnen des Werkzeugs auftretenden Beanspruchungen auch Spannbolzen 24 in anderer Anzahl vorgesehen sein. Für eine lagerichtige Positionierung der jeweiligen Werkzeughälfte in bezug auf die zugeordnete Schnellspannplatte sind je Werkzeughälfte wenigstens zwei Spannbolzen erforderlich. Angesichts der Ausrüstung der Spannbolzen 24 mit sich zu den freien Spannbolzenenden hin verjüngenden Konen 42 ist ein einfaches und unproblematisches Einführen der Spannbolzen in die Aufnahmebohrungen 25 der Schnellspannplatten und somit eine präzise Zentrierung der Werkzeughälften beim Spannen gewährleistet.

## Ansprüche

1. Schnellspannvorrichtung zum lösbaren Spannen der gegeneinander bewegbaren Hälften eines Werkzeugs, insbesondere einer Spritzgießform, an den Aufnahmeplatten einer Maschine, bei der
   - seitlich von den Werkzeughälften (12, 13) vorstehende Spannbolzen (24) in Aufnahmebohrungen (25) eingreifen, die sich in ihrerseits an den maschinenseitigen Aufnahmeplatten (20, 21) befestigbaren Schnellspannplatten (16, 17; 16', 17') rechtwinklig zu deren Flächenausdehnung erstrecken,
   - die über die Werkzeughälften (12, 13) vorstehenden Abschnitten der Spannbolzen (24) als sich zu den Spannbolzenenden hin verjüngende Konen (42) ausgebildet und mit Querausnehmungen (37) in Form einseitig offener, annähernd U-förmiger Quernuten versehen sind, welche Querausnehmungen jeweils etwa bis zur Längsachse (36) der Spannbolzen reichen,
   - die Aufnahmebohrungen (25) in den Schnellspannplatten (16, 17; 16', 17') als den Konen (42) der Spannbolzen (24) angepaßte Innenkonen ausgebildet sind,
   - in die Querausnehmungen (37) der Spannbolzen (24) Verriegelungsstangen (36) eingreifen, die in rechtwinklig zu den Aufnahmebohrungen (25) für die Spannbolzen (24) verlaufenden Lagerbohrungen (27) in den Schnellspannplatten (16, 17; 16', 17') drehbar aufgenommen und axial aus ihren Eingriffslagen mit den Querausnehmungen (37) in den Spannbolzen (24) verschiebbar sind,
   - jede Verriegelungsstange (26) eine in der Kupplungslage mit einer Spannfläche (41) der jeweils durchdrungenen Querausnehmung (37) eines Spannbolzens (24) verspannten Spannexzenter (31) besitzt.

2. Werkzeug nach Anspruch 1, dadurch gekennzeichnet, daß die sich jeweils zum freien Ende eines jeden Spannbolzens hin verjüngenden Konen (42) sich über die gesamte Länge der in der Kupplungslage in die Aufnahmebohrungen (25) eingreifenden Abschnitte der Spannbolzen erstrecken.

## Claims

1. Quick-acting clamping device for the detachable clamping of the relatively movable halves of a tool, in particular an injection-moulding mould, at the receiving plates of a machine, in which quick-acting clamping device:
   - clamping bolts (24) protrude laterally from the tool halves (12, 13) and engage into receiving bores (25), which in their turn extend at the quick-acting clamping plates (16, 17; 16', 17'), which are fastenable to the receiving plates (20, 21) at the machine, and at right angles to the areal extent of the first-mentioned plates,
- the portions of the clamping bolts (24), which protrude beyond the tool halves (12, 13), are constructed as cones (42) narrowing towards the clamping bolt ends and provided with transverse recesses (37) in the shape of one-sidedly open, approximately U-shaped transverse grooves which each reach to about the longitudinal axis (36) of the clamping bolts,
- internal cones matched to the cones (42) of the clamping bolts (24) are concerned in the case of the receiving bores (25) in the quick-acting clamping plates (16, 17; 16', 17'),
- locking rods (26), which are received to be rotatable in the quick-acting clamping plates (16, 17; 16', 17') in bearing bores (27) extending at right angles to the receiving bores (25) for the clamping bolts (24) and displaceable axially out of their positions of engagement with the transverse recesses (37) in the clamping bolts (24), engage into the transverse recesses (37) in the clamping bolts (24) and
- each locking rod (26) possesses a clamping eccentric (31), which in the coupling position is clamped against a clamping surface (41) of the respectively penetrated transverse recess (37) of a clamping bolt (24).

2. Tool according to claim 1, characterised thereby, that the cones (42), which each taper down towards the respective free end of each clamping bolt, extend over the entire length of those portions of the clamping bolts, which in the coupling position engage into the receiving bores (25).


## Revendications

1. Dispositif de serrage rapide, destiné à serrer, d'une manière démontable, les moitiés d'un moule mobiles l'une par rapport à l'autre, en particulier d'un moule de moulage par injection, contre les plateaux récepteurs d'une machine, dispositif de serrage rapide dans lequel:
- des boulons de serrage (24), en saillie latérale par rapport aux moitiés de moule (12, 13), engrènent dans des alésages récepteurs (25), qui s'étendent, dans des plateaux de serrage rapide (16, 17 ; 16', 17'), qui pour leur part peuvent être fixés aux plateaux récepteurs (20, 21) côté machine, perpendiculairement à leur surface,
- les tronçons des boulons de serrage (24) en saillie par rapport aux moitiés de moule (12, 13) sont conçues comme des cônes (42), qui s'effilent vers les extrémités des boulons de serrage, et sont pourvus d'évidements transversaux sous forme de rainures transversales approximativement en U, ouvertes sur un côté, et dont chacune arrive approximativement jusqu'à l'axe longitudinal des boulons de serrage,
- pour ce qui est des alésages récepteurs (25) aménagés dans les plateaux de serrage rapide (16, 17 ; 16', 17'), il s'agit de cônes intérieurs, adaptés aux cônes (42) de boulons de serrage (24),
- dans les évidement transversaux (37) des boulons de serrage (24) pénètrent des tiges de verrouillage (26), qui sont logées en rotation dans les plateaux de serrage rapide (16, 17 ; 16', 17'), dans des alésages de palier (27) perpendiculaires aux alésages récepteurs (25) destinés aux boulons de serrage (24), et peuvent subir un déplacement axial à partir de leur position d'engrènement avec les évidements transversaux (37) aménagés dans les boulons de serrage (24),
- chaque tige de verrouillage (26) possède un ex centrique de serrage (31), serré, en position d'accouplement, contre une surface de serrage (41) de l'évidement transversal traversant correspondant (37) d'un boulon de serrage (24).

2. Moule selon la revendication 1, caractérisé en ce que les cônes (42), qui s'effilent chacun vers l'extrémité libre de chaque boulon de serrage, s'étendent sur toute la longueur des tronçons des boulons de serrage pénétrant en position d'accouplement dans les alésages récepteurs (25).

FIG.1

EP 0 184 744 B1

FIG.3

FIG.2

FIG.4

FIG.5

FIG.8

FIG.6

FIG.7